# EUROPÄISCHE PATENTSCHRIFT

(11) **EP 4 200 053 B1**
(45) Veröffentlichungstag und Bekanntmachung des Hinweises auf die Patenterteilung: **26.06.2024**
(21) Anmeldenummer: 21765867.3
(22) Anmeldetag: 17.08.2021
(51) Int. Cl.: B01D 46/00, B01D 46/10, B01D 46/52, F02M 35/024

(54) **FILTERELEMENT UND FILTERSYSTEM**
FILTER ELEMENT AND FILTER SYSTEM
ÉLÉMENT FILTRANT ET SYSTÈME DE FILTRATION

(30) Priorität: 19.08.2020 DE 102020121712
(43) Veröffentlichungstag der Anmeldung: 28.06.2023
(73) Patentinhaber: MANN+HUMMEL GmbH, 71636 Ludwigsburg (DE)
(72) Erfinder: JOOS, Bernd, 73547 Lorch (DE); DIRNBERGER, Timo, 71672 Marbach (DE)
(74) Vertreter: Mann + Hummel Intellectual Property
(86) Internationale Anmeldenummer: PCT/EP2021/072838
(87) Internationale Veröffentlichungsnummer: WO 2022/038138

(56) Entgegenhaltungen:
- DE-A1-102004 036 083
- DE-A1-102017 011 876
- DE-B3-102008 036 913
- JP-A- 2008 232 111
- US-A1- 2010 186 596

## Beschreibung

### Technisches Gebiet

Die Erfindung betrifft ein Filterelement zum Filtern eines Fluids, insbesondere zur Verwendung für Kassettenluftfilter einer Brennkraftmaschine oder als Innenraumluftfilter, insbesondere eines Kraftfahrzeugs sowie ein Filtersystem mit einem Filterelement.

### Stand der Technik

In der Praxis werden Partikelfilter zum Herausfiltern von in gasförmigen Fluiden, beispielsweise Luft, enthaltenen partikulären Verunreinigungen eingesetzt. Die Partikelfilter weisen ein Filtergehäuse mit einem Einlass für das zu filternde Fluid und mit einem Auslass für das gefilterte Fluid auf. Das Filtergehäuse weist nach einer Bauart eine Einschuböffnung für ein Filterelement auf, um dieses in einem Einschubfach im Inneren des Filtergehäuses zu positionieren. Das im Einschubfach angeordnete Filterelement kann dadurch im Filterbetrieb von dem zu filternden Fluid entlang einer Hauptströmungsachse, vorzugsweise von unten nach oben, durchströmt werden. Eine Dichtungseinrichtung des Filterelements ermöglicht den erforderlichen Dichtsitz des Filterelements im Filtergehäuse, so dass im Filterbetrieb einer unerwünschten Leck- oder Bypassströmung des zu filternden gasförmigen Fluids um das Filterelement herum entgegengewirkt wird.

In der DE 10 2008 036 913 B3 wird ein Luftfiltersystem mit einem flachen, plattenartigen Filterelement beschrieben, das möglichst kompakt baut und das dennoch Maßnahmen vorsieht, um einem Zusetzen des Filterelements mit Schnee und/oder Eis entgegenzuwirken. Ein solches Luftfiltersystem sieht einen Rahmen vor, in den ein plattenartig ausgebildetes Filterelement einsetzbar ist, welches eine Rohluftseite, eine im Wesentlichen parallel dazu angeordnete Reinluftseite und im Wesentlichen senkrecht dazu verlaufende Schmalseiten aufweist, und mit einem Gehäuse, in welches der Rahmen samt Filterelement einführbar ist. Für den Fall, dass das Filterelement eine rechteckige Grundfläche vorsieht, sind insgesamt vier Schmalseiten vorhanden, zwei parallel zueinander verlaufende Längsschmalseiten und zwei, zu den Längsschmalseiten jeweils senkrecht verlaufende Querschmalseiten. Ferner ist ein Bypassventil vorgesehen, über das im geöffneten Zustand Warmluft in den zwischen dem Gehäuse oder dem Rahmen und wenigstens einer Schmalseite liegenden Bereich derart gelangt, dass die Warmluft von dort durch die Schmalseite in das Filterelement einströmt und durch die Reinluftseite aus dem Filterelement ausströmt.

Ferner ist aus DE 10 2017 011876 A1 ein Filtersystem bekannt, das ein Filtergehäuse aufweist, das zwei getrennte Ansaugwege aufweist. Ein Ansaugpfad für einen zweiten Fluidstrom wird durch eine gehäuseseitige Trennwand und eine Gehäuseaußenwand eines Untergehäuses bereitgestellt.

### Offenbarung der Erfindung

Eine Aufgabe der Erfindung ist es, ein verbessertes Filterelement zum Filtern eines Fluids zu schaffen, das einem Zusetzen des Filterelementes mit Schwebeteilchen aus dem Fluid entgegenwirkt.

Eine weitere Aufgabe ist es, ein Filtersystem zum Filtern eines Fluids zur Aufnahme eines solchen austauschbaren Filterelements zu schaffen.

Die vorgenannten Aufgaben werden nach einem Aspekt der Erfindung gelöst von einem Filterelement für ein Filtersystem, mit wenigstens einem Filterbalg, der in einem Rahmen angeordnet ist und der eine erste flächige Anströmfläche für einen ersten Fluidstrom aufweist, sowie wenigstens eine zweite Anströmfläche für einen zweiten Fluidstrom separat vom ersten Fluidstrom, wobei die zweite Anströmfläche von der ersten Anströmfläche getrennt ist und wobei ein rohseitiger Strömungskanalabschnitt eines zur Führung des zweiten Fluidstroms vorgesehenen Strömungskanals innerhalb des Rahmens angeordnet ist.

Günstige Ausgestaltungen und Vorteile der Erfindung ergeben sich aus den weiteren Ansprüchen, der Beschreibung und der Zeichnung.

Es wird ein Filterelement zum Filtern eines Fluids vorgeschlagen mit wenigstens einem Filterbalg, der in einem Rahmen angeordnet ist und der eine erste flächige Anströmfläche für einen ersten Fluidstrom sowie wenigstens eine zweite Anströmfläche für einen zweiten Fluidstrom separat vom ersten Fluidstrom aufweist. Die zweite Anströmfläche ist von der ersten Anströmfläche getrennt. Ein rohseitiger Strömungskanalabschnitt eines zur Führung des zweiten Fluidstroms vorgesehenen Strömungskanals ist innerhalb des Rahmens angeordnet vorgesehen.

Die Trennung zwischen erster und zweiter Anströmfläche ist vorteilhafterweise fluiddicht ausgebildet, insbesondere wenigstens ausreichend fluiddicht ausgebildet. Dabei bedeutet ausreichend fluiddicht, dass die Trennung unter normalen Betriebsbedingungen so fluiddicht ausgebildet ist, dass die Funktion des Filterelements praktisch nicht gestört wird. "Normale Betriebsbedingungen" bedeutet, dass der zuströmende Fluidstrom, insbesondere der zuströmende Luftstrom, unter normalem Atmosphärendruck steht und nicht mit Überdruck eingeblasen wird. Eine Leckage ist dann tolerierbar, wenn die Funktion des Filterelements praktisch ungestört bleibt, d.h. die Leckage keine größeren Partikel passieren lässt als das Medium des Filterelementes. Die Trennung kann innerhalb des Filterbalgs erfolgen, etwa durch eine Trennwand aus Kunststoff oder dergleichen, die in den Filterbalg hineinragt, oder durch eine Trennwand, die an den Filterbalg anschließt.

Der Filterbalg kann insbesondere einstückig ausgebildet sein, sodass die beiden Anströmflächen in einem einzigen Filterbalg aus einem Filtermedium ausgebildet sind. Alternativ ist jedoch auch möglich, dass die beiden Anströmflächen in zwei verschiedenen Filterbälgen mit gleichen oder mit unterschiedlichen Filtermedien realisiert sind, welche aneinander anschließend in dem Filterelement angeordnet sein können.

Günstigerweise kann mit dem Filterelement ein Filtersystem bereitgestellt werden, das eine günstige Variantenbildung mit oder ohne Schwebeteilchenventil erlaubt. Es können hierdurch Bauteile entfallen, so dass keine zusätzlichen Spritzgusswerkzeuge notwendig sind, wenn bei der Herstellung des Filtersystems Spritzguss eingesetzt wird.

Die Durchströmungsrichtung ist bei einem flachen Filter beispielsweise senkrecht zur Anströmfläche und Abströmfläche, die bei einem flachen Filter an gegenüberliegenden Flachseiten des Filterbalgs vorgesehen sind, gerichtet. Vorzugsweise bilden die Abströmfläche und die Anströmfläche bei einem Filter mit aufgestellten Falten die Flächen, in denen jeweils die Faltkanten liegen.

Bei dem erfindungsgemäßen Filterelement, welches beispielsweise als ein kunststoffumspritztes Filterelement (KUF-Element) ausgebildet sein kann, ist außer dem Hauptfiltrationsbereich mit einer ersten Anströmfläche des Filterbalgs wenigstens ein weiterer Filtrationsbereich mit einer zweiten Anströmfläche vorhanden, welche zur Anbindung einer weiteren Ansaugstelle eines Fluids, beispielsweise Luft, dient. Die Anbindung der weiteren Ansaugstelle kann stirnseitig und/oder über Randsegmente eines abgetrennten Bereiches am kunststoffumspritzten Filterelement mit einer teilweisen Umlenkung des zweiten Fluidstroms erfolgen. Das Randsegment ist hierbei ein Flächenelement im Filterbalg nahe des Umfangs oder angrenzend an den Umfang des Filterbalgs, beispielsweise eine Schmalseite. In einer besonderen Ausführung können die erste und die zweite Anströmfläche zueinander parallel sein.

Der zweite Fluidstrom kann von der Rückseite des Filterbalgs her erfolgen und beispielsweise um 180° oder mehr umgelenkt werden, so dass die erste und die zweite Anströmfläche auf derselben Seite des Filterbalgs liegen.

Der abgetrennte weitere Filtrationsbereich am KUF-Element kann sich dabei am Rand oder auch innerhalb des Filterelementes befinden. Es können auch mehrere weitere Filtrationsbereiche mit weiteren Anströmflächen vorgesehen sein. Diese können für gleiche oder für unterschiedliche Anschlussrichtungen ausgebildet sein.

Eine solche Ausführung des Filterelements weist wesentliche Vorteile gegenüber dem Stand der Technik auf, der beispielsweise Schneeventillösungen mit Filterelementen aus Papier beschreibt, bei denen am Filterelement auf der Rohluftseite ein Vlies angebracht sein kann, das direkt einen weiteren Anströmkanal abdichtet. Das erfindungsgemäße Filterelement weist eine separate Anströmfläche auf. Über die zweite Anströmfläche des weiteren Filtrationsbereichs kann ein separater zweiter Fluidstrom, der beispielsweise auch angewärmt sein kann, zugeführt werden. Auf diese Weise ist es möglich, mit einem kunststoffumspritzten Filterelement unterschiedliche Luftströme zu filtern. Als Filterbalg kann beispielsweise ein zickzackgefalteter Filterbalg aus einem Vlies oder dergleichen eingesetzt werden.

Der separate weitere Filtrationsbereich des Filterelements, der die zweite Anströmfläche bildet, kann als eine gegenüber dem ersten Fluidstrom abgetrennte Kammer ausgebildet sein. Hierfür kann ein Trennelement vorgesehen sein. Eine Wand der Kammer kann so wirksam verhindern, dass eine Überströmung zum Hauptfiltrationsbereich mit der ersten Anströmfläche erfolgt. Die Kammer kann in einem randseitigen Faltenbereich des Filterbalgs durch eine Rippe als Trennelement abgetrennt realisiert sein. Diese kann in den Filterbalg eingreifen, oder sie kann an eine Falte des Faltenbalgs anschließen.

Gegebenenfalls kann es von Vorteil sein, wenigstens zwei verschiedene Filterbälge mit unterschiedlichen Filtermedien für die beiden Anströmflächen zu verwenden, so dass jeder Filterbalg eine Anströmfläche aufweist, welche dann durch das Trennelement voneinander getrennt sind. So ist es beispielsweise möglich, dass der Filterbalg der ersten Anströmfläche als Faltenfilter und der Filterbalg des zweiten Filtrationsbereichs als Vlieslage ausgebildet sind. Der Faltenfilter weist eine signifikant höhere Filtrationsfläche auf als die Vlieslage, wodurch der funktionalen Unterteilung in einen Hauptfiltrationsbereich für den Normalbetrieb für die reguläre Durchströmung, wenn der erste Anströmbereich frei durchgängig ist und in einen Nebenfiltrationsbereich für die Durchströmung in Notfällen, wenn der erste Anströmbereich zugesetzt ist, Rechnung getragen wird.

Der zweite Fluidstrom kann mit erwärmter Luft erfolgen. Das Filterelement kann in einem Notlaufbetrieb über den zweiten Zustrom betrieben werden, wenn die erste Anströmfläche durch Schwebeteilchen im Fluid, beispielsweise durch Schnee, zugesetzt ist. Durch die zweite Anströmfläche ist die Filteraufgabe des Filterelements auch bei zugesetzter erster Anströmfläche sichergestellt.

Gemäß einer vorteilhaften Ausgestaltung kann im Filterbalg wenigstens ein Trennelement zwischen erster und zweiter Anströmfläche angeordnet sein. Auf diese Weise kann wirksam verhindert werden, dass ein erster Fluidstrom, der im Wesentlichen nur an die erste Anströmfläche gelangen soll, an die zweite Anströmfläche gelangt und so die zweite Anströmfläche möglicherweise mit Schwebeteilchen aus dem Fluid zusetzen könnte. Der Fluidstrom für die zweite Anströmfläche wiederum kann bevorzugt durch diesen Teil des Filterbalgs strömen, der dadurch frei von Zusetzungen durch Schwebeteilchen, beispielsweise durch Schnee, ist.

Gemäß einer vorteilhaften Ausgestaltung kann der Strömungskanalabschnitt an einem Randsegment, beispielsweise einer Stirnseite des Filterelements angrenzen. Dies erlaubt eine kompakte Bauweise des Filterelements. Vorteilhaft kann ein flacher Filterbalg eingesetzt werden, der in einem Rahmen angeordnet ist, der auch den Strömungskanalabschnitt einschließt. Filterbalg und Strömungskanalabschnitt können gemeinsam mit einem Kunststoffrahmen umspritzt sein.

Gemäß einer vorteilhaften Ausgestaltung kann der Strömungskanalabschnitt für den zweiten Fluidstrom ein Segment parallel oder schräg zu einer Schmalseite des Filterbalgs und ein Segment parallel oder schräg zu einer Flachseite des Filterbalgs aufweisen. Vorteilhafter Weise sind die Segmente des Strömungskanalabschnitts strömungsgünstigen räumlich gekrümmt ausgeführt.

Der zweite Fluidstrom kann im Strömungskanalabschnitt entgegen der Durchströmungsrichtung des ersten Fluidstroms durch den ersten Filterbereich strömen, an der zweiten Anströmfläche in den Filterbalg eintreten und den Filterbalg in gleicher Richtung wie der erste Fluidstrom durchströmen. Eine Strömungslenkung, insbesondere eine Strömungsumkehr, im Strömungskanalabschnitt erlaubt die Anordnung des rohseitigen Einlasses für den zweiten Fluidstrom in einer bauraumgünstigen Weise.

Gemäß einer weiteren vorteilhaften Ausgestaltung kann der Strömungskanalabschnitt für den zweiten Fluidstrom ein Segment zu einer Schmalseite des Filterbalgs und ein Segment in einem Winkel zwischen 0° und 180° zu einer Flachseite des Filterbalgs aufweisen.

Gemäß einer weiteren Ausgestaltung kann der Strömungskanalabschnitt an einer beliebigen Fläche des Filterelements angrenzen, beispielweise mittig im Filterelement angeordnet sein, wobei der Filterbalg im Bereich des Strömungskanalabschnitts unterbrochen und/oder gegen den Strömungskanalabschnitt gedichtet ist.

Gemäß einer vorteilhaften Ausgestaltung kann ein Deckelelement vorgesehen sein, welches den Strömungskanalabschnitt für den zweiten Fluidstrom an einer Stirnseite und die zweite Anströmfläche abdeckt. Hierdurch kann der Strömungskanalabschnitt zu einer Seite des Filterelements, beispielsweise zur Rohseite hin, abgeschlossen sein und der zweite Fluidstrom zur zweiten Anströmfläche des Filterbalgs umgelenkt werden. Das Deckelelement kann an dem Filterbalg über ein Trennelement befestigt werden. Das Trennelement kann mit dem Deckelelement zur flächigen Abdeckung der zweiten Anströmfläche gegen den ersten Fluidstrom fluiddicht, vorzugsweise zumindest unter normalen Betriebsbedingungen ausreichend fluiddicht, verbunden sein. Das Deckelelement und das Trennelement können beispielsweise aus Kunststoff gebildet sein. Der separate weitere Filtrationsbereich des Filterelements für die zweite Anströmfläche kann als eine gegenüber dem ersten Fluidstrom abgetrennte Kammer ausgebildet sein. Das Trennelement kann so wirksam verhindern, dass eine Überströmung des zweiten Fluidstroms zum Hauptfiltrationsbereich mit der ersten Anströmfläche erfolgt. Das Trennelement kann eine Rippe sein, die in den Filterbalg hineinragt, oder an den Filterbalg angesetzt sein.

Gemäß einer vorteilhaften Ausgestaltung kann der Rahmen eine Dichtfläche aufweisen, welche zur Abdichtung von Filterbalg und Strömungskanalabschnitt gegen das Gehäuse und zur Abdichtung zwischen der Abströmseite des Filterbalgs und dem rohseitigen Strömungskanalabschnitt vorgesehen ist. Als Dichtelement kann eine einteilige Dichtung in Form eines so genannten Henkelelements eingesetzt sein. Dieses weist einen ersten geschlossenen Dichtungsring auf, welcher den Filterbalg abdichtet und einen zweiten geschlossenen Dichtungsring, welcher den Strömungskanalabschnitt abdichtet, jedoch keine Filterfläche umschließt.

Gemäß einer vorteilhaften Ausgestaltung kann das Filterelement vorteilhaft als sogenanntes Schubladenfilterelement für einen seitlichen Einschub in ein Filtergehäuse ausgebildet sein. Ein Schubladenfilterelement stellt eine montagegerechte Lösung für die Integration des Filterelements in ein Filtersystem dar, das sich im Wartungsfall auch leicht tauschen lässt. Das Schubladenfilterelement kann quer zur Durchströmungsrichtung in ein Filtergehäuse eingeführt werden. Alternativ ist jedoch auch möglich, das Filterelement von oben in ein Gehäuseunterteil einzusetzen, das anschließend mit einem Gehäusedeckel verschlossen werden kann.

Gemäß einer vorteilhaften Ausgestaltung kann der wenigstens eine Filterbalg zickzackförmig zu Falten gefaltet sein, mit parallelen, in einer Längserstreckung des Filterbalgs aufeinander folgenden Faltkanten, die sich jeweils zwischen gegenüberliegenden Stirnkanten des Filterbalgs erstrecken. Dabei kann der wenigstens eine Filterbalg umlaufend mit einem durchgehenden Rahmen umspritzt sein, welcher auch den Strömungskanalabschnitt einschließt. Werden in dem Filterelement zwei unterschiedliche Filterbälge für die zwei Anströmbereiche angeordnet, können auch beide Filterbälge zusammen umlaufend mit einem durchgehenden Rahmen umspritzt sein. Ein solches Filterelement ist vorteilhaft als Luftfilter, beispielsweise einer Brennkraftmaschine, einzusetzen und stellt eine kostengünstige und effiziente Lösung eines Luftfilters dar. Durch den angespritzten Rahmen lässt sich das Filterelement einfach montieren und im Bedarfsfall auch austauschen.

Nach einem weiteren Aspekt betrifft die Erfindung ein Filtersystem zum Filtern eines Fluids mit einem Filtergehäuse und einem in dem Filtergehäuse zwischen einer Rohseite und einer Reinseite austauschbar angeordneten Filterelement zum Filtern des Fluids, mit wenigstens einem Filterbalg, der in einem Rahmen angeordnet ist und der eine erste flächige Anströmfläche für einen ersten Fluidstrom sowie wenigstens eine zweite Anströmfläche für einen zweiten Fluidstrom aufweist, wobei die zweite Anströmfläche von der ersten Anströmfläche getrennt ist. Dabei ist ein rohseitiger Strömungskanal zur Führung des zweiten Fluidstroms von einem rohseitigen Einlass zur zweiten Anströmfläche geführt. Das Filtergehäuse weist einen ersten Einlass zum Einströmen des ersten Fluidstroms an die erste Anströmfläche und wenigstens den zweiten Einlass zum Einströmen des zweiten Fluidstroms an die wenigstens zweite Anströmfläche auf, wobei ein Strömungskanalabschnitt des Strömungskanals innerhalb des Filterelements angeordnet vorgesehen ist.

Bei dem Filterelement des erfindungsgemäßen Filtersystems, welches beispielsweise mit einem kunststoffumspritzten Filterelement (KUF-Element) ausgestattet sein kann, ist außer dem Hauptfiltrationsbereich mit einer ersten Anströmfläche des Filterbalgs ein weiterer Filtrationsbereich mit einer zweiten Anströmfläche vorhanden, welche zur Anbindung einer weiteren Ansaugstelle eines Fluids, beispielsweise Luft, dient. Der Strömungskanalabschnitt für den zweiten Fluidstrom ist innerhalb des Rahmens und vorzugsweise angrenzend an den Filterbalg angeordnet.

Der abgetrennte weitere Filtrationsbereich am KUF-Element kann sich dabei am Rand oder auch innerhalb des Filterelementes befinden. Es können auch mehrere Filtrationsbereiche für unterschiedliche Anschlussrichtungen ausgebildet sein. Eine solche Ausführung des Filterelements weist wesentliche Vorteile gegenüber dem Stand der Technik auf, der beispielsweise Schneeventillösungen mit Filterelementen aus Papier beschreibt, bei denen am Filterelement auf der Rohluftseite ein Vlies angebracht sein kann, das direkt einen weiteren Anströmkanal abdichtet. Das erfindungsgemäße Filterelement weist eine separate Anströmfläche auf, über welche ein separater zweiter Fluidstrom, der beispielsweise auch angewärmt sein kann, zugeführt werden kann. Auf diese Weise ist es möglich, mit einem kunststoffumspritzten Filterelement unterschiedliche Luftströme zu filtern. Als Filterbalg kann beispielsweise ein zickzackgefalteter Filterbalg aus einem Vlies eingesetzt werden.

Gemäß einer vorteilhaften Ausgestaltung kann der Strömungskanal von dem rohseitigen Einlass zu der zweiten Anströmfläche über wenigstens einen Teil einer Flachseite des Filterbalgs geführt sein. Die Anbindung der weiteren Ansaugstelle für den zweiten Fluidstrom kann so über die Flachseite eines abgetrennten Bereiches am kunststoffumspritzten Filterelement mit oder ohne eine teilweise Umlenkung des zweiten Fluidstroms erfolgen und kann so bauraumtechnisch günstig untergebracht werden.

Gemäß einer vorteilhaften Ausgestaltung kann der Strömungskanal von dem rohseitigen Einlass zu der zweiten Anströmfläche durch wenigstens einen Teil eines Filterelement-Randsegments geführt sein. Die Anbindung der weiteren Ansaugstelle kann so über das Randsegment eines abgetrennten Bereiches am kunststoffumspritzten Filterelement mit einer teilweisen Umlenkung des zweiten Fluidstroms erfolgen und kann so bauraumtechnisch günstig untergebracht werden.

Gemäß einer vorteilhaften Ausgestaltung kann in einem Gehäuseteil ein Ventil im zweiten Einlass für den zweiten Fluidstrom angeordnet sein. Aus bauraumtechnischen Gründen lässt sich das Ventil günstig mit dem zweiten Einlass kombinieren, wodurch ein möglichst kompaktes Filtersystem dargestellt werden kann. Außerdem kann so eine sichere Funktion des Filtersystems im Normalbetrieb mit möglichst effektiver Filterung im Bereich der ersten Anströmfläche erreicht werden.

Gemäß einer vorteilhaften Ausgestaltung kann ein Zustrom des Fluids über das Ventil druckgesteuert ausgebildet sein oder durch einen Strömungswiderstand gesteuert ausgebildet sein. Dadurch lässt sich vorteilhaft erreichen, dass ein zweiter Fluidstrom nur bei zugesetzter erster Anströmfläche in den Strömungskanal der zweiten Anströmfläche eintritt, da dadurch ein entsprechender Unterdruck sich im Filtersystem aufbaut. Der Bereich der zweiten Anströmfläche im Filterelement wird so nur im Notbetrieb beansprucht, während im Normalbetrieb ein erster Fluidstrom nur über die erste Anströmfläche strömt.

Gemäß einer vorteilhaften Ausgestaltung kann in einem Gehäuseteil eine Strömungskammer mit einem Ventil, beispielsweise als Rückschlagventil ausgeführt, für den zweiten Fluidstrom ausgebildet sein. Auf diese Weise kann wirksam verhindert werden, dass im Normalbetrieb ein Fluidstrom über die zweite Anströmfläche einströmt, sondern nur, wenn die erste Anströmfläche zugesetzt ist. Damit kann eine sichere Funktion des Filtersystems im Normalbetrieb mit möglichst effektiver Filterung im Bereich der ersten Anströmfläche erreicht werden.

Gemäß einer vorteilhaften Ausgestaltung kann das Filterelement als Schubladenfilterelement ausgebildet sein, das quer zur Hauptströmungsachse des Fluids in das Filtergehäuse eingeführt oder einführbar ist. Vorteilhaft kann der Filterbalg als Flachfilterbalg ausgebildet sein. Der Balg eines Flachfilters stellt eine günstige Bauform für einen Luftfilter dar und lässt sich insbesondere als Schubladenfilter vorteilhaft verwenden, wodurch sich günstige Bauraumverhältnisse ergeben.

Gemäß einer vorteilhaften Ausgestaltung kann das Filtergehäuse ein Einschubfach mit einer Rahmenführung für das Filterelement aufweisen, mittels derer das Filterelement über eine Einschuböffnung des Filtergehäuses in das Einschubfach einschiebbar ist, so dass eine Dichtung des Filterelements an einer Gehäusedichtfläche umlaufend und in einer zur Hauptströmungsachse des Fluids axialen Richtung dichtend anliegt. Die Durchströmungsrichtung des Fluids durch den Filterbalg ist vorzugsweise parallel zur Hauptströmungsachse gerichtet. Ein Schubladenfilterelement stellt eine montagegerechte Lösung für die Integration des Filterelements in ein Filtersystem dar, das sich im Wartungsfall auch leicht tauschen lässt. Alternativ ist jedoch auch möglich, das Filterelement beispielsweise in ein Gehäuseunterteil eines Filtergehäuses von oben einzusetzen, das anschließend mit einem Gehäusedeckel verschlossen werden kann.

Das beschriebene Filtersystem kann vorteilhaft als Luftfilter, insbesondere als Luftfilter einer Brennkraftmaschine oder als Innenraumluftfilter, insbesondere eines Kraftfahrzeugs eingesetzt werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: eine geschnittene isometrische Darstellung eines Filtersystems mit montiertem Schubladenfilterelement nach einem Ausführungsbeispiel der Erfindung mit Anströmflächen für einen ersten und zweiten Fluidstrom;
- Fig. 2: eine Detailansicht des Filtersystems nach Figur 1 im Bereich der zweiten Anströmfläche;
- Fig. 3: eine isometrische Darstellung des Gehäuseteils mit einem Einlass für den zweiten Fluidstrom des Filtersystems nach Figur 1;
- Fig. 4: eine isometrische Darstellung des Filterelements aus dem Filtersystem nach Figur 1;
- Fig. 5: eine geschnittene isometrische Darstellung des Filterelements aus dem Filtersystem nach Figur 1.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

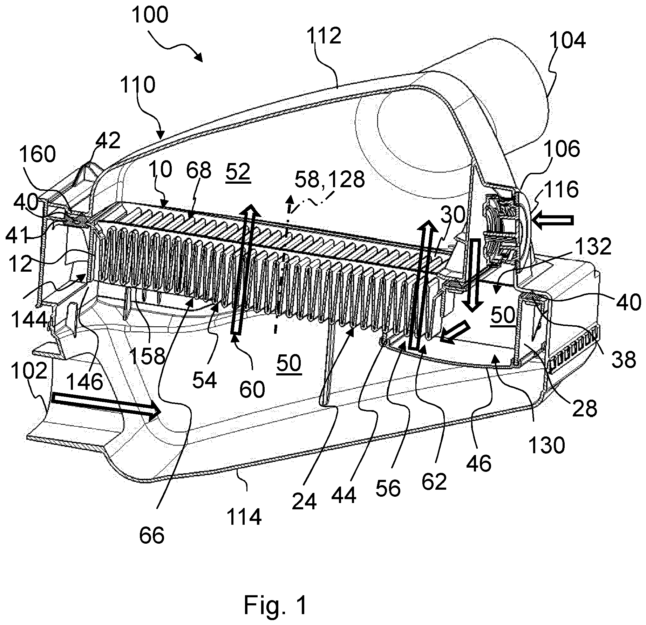

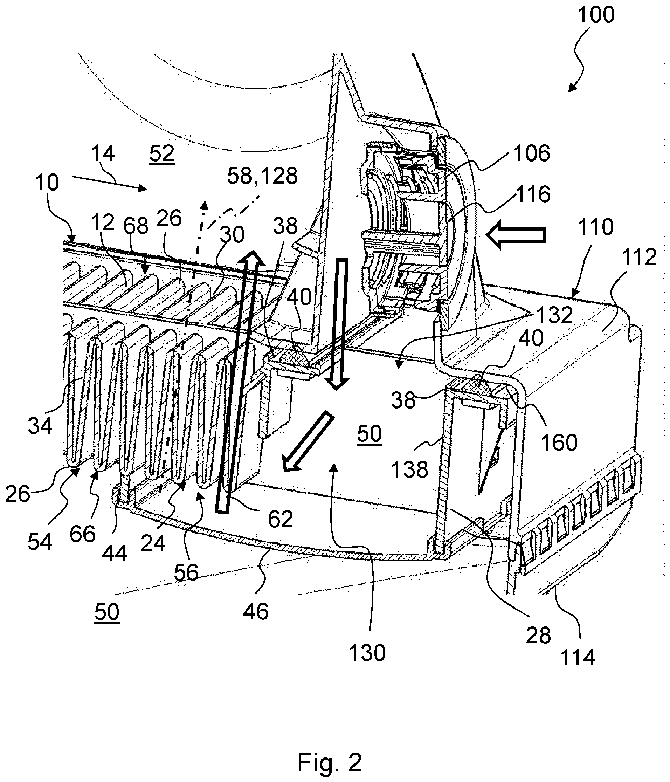

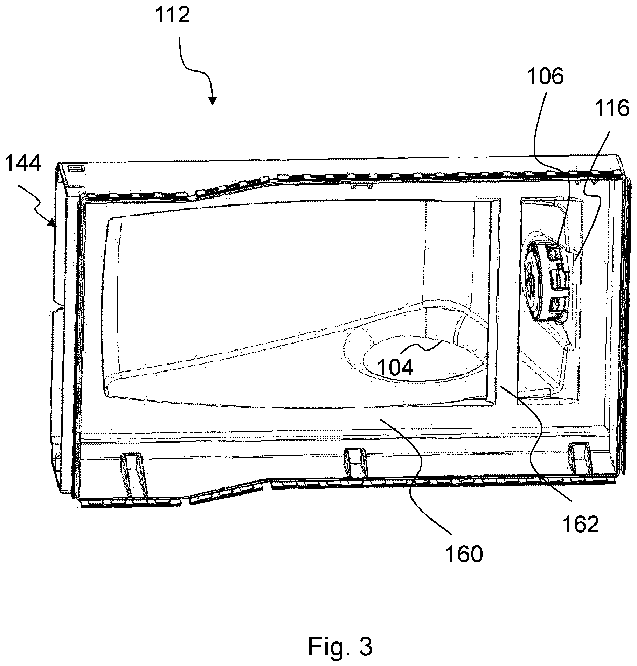

Figur 1 zeigt eine geschnittene isometrische Darstellung eines Filtersystems 100 mit montiertem Schubladenfilterelement 10 nach einem Ausführungsbeispiel der Erfindung mit Anströmflächen 54, 56 für einen ersten und zweiten Fluidstrom 60, 62, während in Figur 2 eine Detailansicht des Filtersystems 100 nach Figur 1 im Bereich der zweiten Anströmfläche 56 dargestellt ist. Figur 3 zeigt eine isometrische Darstellung des Gehäuseteils 112, hier beispielsweise des Gehäuseoberteils 112, mit dem Einlass 106 für den zweiten Fluidstrom 62 des Filtersystems 100 nach Figur 1.

Das Filtersystem 100 weist ein Filtergehäuse 110 mit einem ersten Gehäuseteil 112, beispielsweise einem Gehäuseoberteil 112, und einem zweiten Gehäuseteil 114, beispielsweise einem Gehäuseunterteil 114 sowie ein in dem Filtergehäuse 110 zwischen einer Rohseite 50 und einer Reinseite 52 austauschbar angeordnetes Filterelement 10 zum Filtern eines Fluids auf. Das Filterelement 10 umfasst dabei einen beispielsweise einstückigen Filterbalg 12, mit einer rohseitigen Anströmseite 66 und einer reinseitigen Abströmseite 68. Die Anströmseite 66 umfasst eine erste flächige Anströmfläche 54 für einen ersten Fluidstrom 60 sowie eine zweite Anströmfläche 56 für einen zweiten Fluidstrom 62 separat vom ersten Fluidstrom 60. Die Fluidströme 60, 62 sind durch breite Pfeile angedeutet. Die zweite Anströmfläche 56 ist in diesem Beispiel durch ein Randsegment 30 des Filterbalgs 12 gebildet. Das Randsegment 30 kann sowohl entlang einer Durchströmungsrichtung 58 als auch schräg dazu durchströmbar sein.

Der erste Fluidstrom 60 tritt durch einen ersten Einlass 102 des Gehäuseunterteils 114 in das Filtergehäuse 110 auf der Rohseite 50 ein und strömt dann über die erste Anströmfläche 54 durch den Filterbalg 12 in einer Durchströmungsrichtung 58 auf die Reinseite 52. Der zweite Fluidstrom 62 tritt über einen Einlass 106, in dem ein optionales Ventil 116 angeordnet ist, in einen Strömungskanal 130 ein, durch den der zweite Fluidstrom 62 zur zweiten Anströmfläche 56 geführt ist. Beide Fluidströme 60, 62 treten durch den Auslass 104 wieder aus dem Filtergehäuse 110 aus. Die zweite Anströmfläche 56 ist von der ersten Anströmfläche 54 über ein Trennelement 44 und ein damit verbundenes Deckelelement 46 fluiddicht getrennt. Das Deckelelement 46 ist auf das Trennelement 44 und den Rahmen 28 beispielsweise aufgesteckt.

Der Strömungskanal 130 weist angrenzend an den Filterbalg 12 des Filterelements 10 einen Strömungskanalabschnitt 132 auf. Filterbalg 12 und Strömungskanalabschnitt 132 sind gemeinsam von einem Rahmen 28 umgeben, insbesondere mit dem Rahmen 28 umspritzt. Das Deckelelement 46 verschließt stirnseitig den Strömungskanalabschnitt 132. Der Strömungskanalabschnitt 132 führt den rohseitigen zweiten Fluidstrom 62 am Filterbalg 12 vorbei. Durch eine Strömungsumkehr gelangt der zweite Fluidstrom 62 an die zweite Anströmfläche 56. Der Einlass 106 liegt auf der Seite des Filterbalgs 12, welche den beiden Anströmflächen 54, 56 gegenüberliegt.

Der Rahmen 28 weist eine Dichtfläche 38 auf, auf der eine Dichtung 40 in Form eines Henkelelements angeordnet ist, welche gegen die entsprechende Gehäusedichtfläche 160 des Filtergehäuses 110 abdichtet. Der Strömungskanalabschnitt 132 des Strömungskanals 130 ist zwischen Filterbalg 12 und einer Stirnwand 138 des Rahmens 28 angeordnet.

Das Trennelement 44 ist an die Falten 34 des Filterbalgs 12 angesetzt, beispielsweise angeklebt. Das Trennelement 44 ist mit dem Deckelelement 46 zur flächigen Abdeckung der zweiten Anströmfläche 56 gegen den ersten Fluidstrom 60 verbunden. Das Deckelelement 46 ist auf das Trennelement 44 und die Stirnwand 138 des Rahmens 28 aufgesteckt.

Das Filterelement 10 mit dem Filterbalg 12 ist in diesem Beispiel als Flachfilter in Form eines Schubladenfilterelements ausgebildet. Dazu weist das Filtergehäuse 110 ein Einschubfach 146 mit einer Rahmenführung 158 für das Filterelement 10 auf, mittels derer das Filterelement 10 über eine Einschuböffnung 144 des Filtergehäuses 110 quer zur Durchströmungsrichtung 58 in das Einschubfach 146 einschiebbar ist, so dass eine Dichtung 40 des Filterelements 10 an einer Gehäusedichtfläche 160 umlaufend und in einer zur Hauptströmungsachse 128 des Fluids axialen Richtung dichtend anliegt. Die Durchströmungsrichtung 58 ist parallel zur Hauptströmungsachse 128. Die Durchströmungsrichtung 58 ist hier beispielsweise senkrecht zur Anströmfläche 54, 56 und Abströmseite 68 bzw. Abströmfläche gerichtet. Vorzugsweise bilden Abströmfläche und Anströmfläche bei einem Filterbalg 12 mit aufgestellten Falten 34 die Flächen, in denen jeweils die anströmseitigen und abströmseitigen Faltkanten 26 (Fig. 2) liegen.

Optional können auch andere Geometrien des Filterelements 10 statt eines Flachfilters vorgesehen sein, beispielsweise ein gestuftes Filterelement.

In dem Gehäuseoberteil 112 des Filtergehäuses 110 ist der Einlass 106 für den zweiten Fluidstrom 62 mit einem Ventil 116 für den zweiten Fluidstrom 62 ausgebildet. Das Ventil 116 ist an dem zweiten Einlass 106 angeordnet und kann beispielsweise als Rückschlagventil ausgebildet sein. Ein Zustrom des Fluids über das Ventil 116 kann dabei druckgesteuert oder durch einen Strömungswiderstand gesteuert erfolgen. Das Ventil 116 ist jedoch für die Funktion der zweiten Anströmfläche 56 als separaten Filtrationsbereich für einen Notbetrieb bei zugesetzter erster Anströmfläche 54 nicht unabdingbar nötig.

Figur 3 zeigt eine isometrische Darstellung des Gehäuseoberteils 112 des Filtersystems 100 nach Figur 1. Das Gehäuseoberteil 112 umfasst den reinseitigen Auslass 104 des Fluids aus dem Filtergehäuse 110 und den zweiten Einlass 106 für den zweiten Fluidstrom 62 (siehe Figuren 1 und 2). Zu erkennen ist die Gehäusedichtfläche 160 des Filtergehäuses 110, gegen die das Filterelement 10 mit einer Dichtung 40 in Form eines Henkelelements abgedichtet werden kann. Ein Steg 162 der Gehäusedichtfläche 160 ist zwischen dem reinseitigen Bereich für den Filterbalg 12 und dem rohseitigen Bereich für den Strömungskanalabschnitt 132 angeordnet.

Das Gehäuseteil 112 weist seitlich eine Einschuböffnung 144 für das als Schubladenfilterelement ausgebildete Filterelement 10 auf.

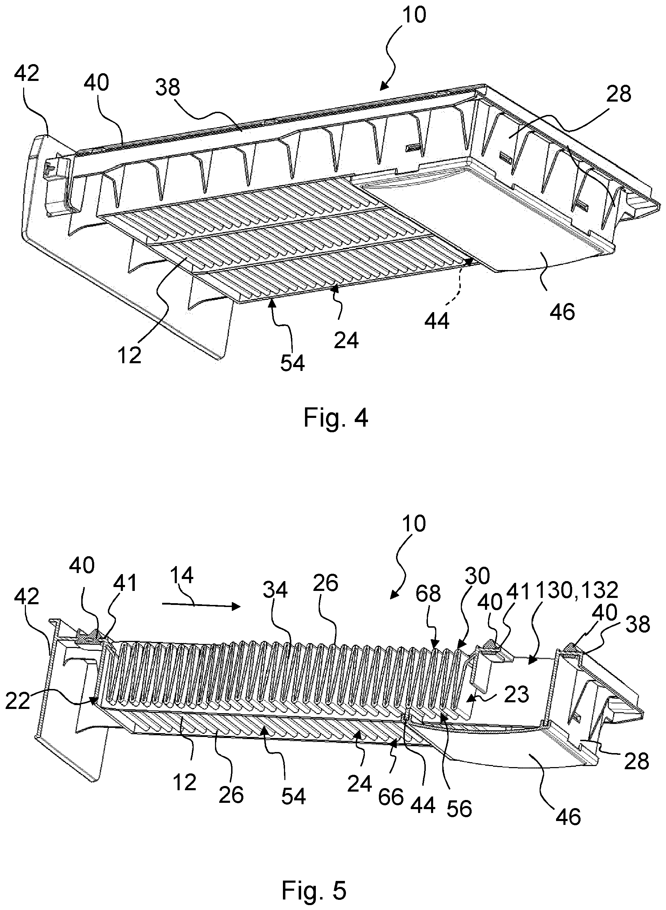

In Figur 4 ist eine isometrische Darstellung des Filterelements 10 aus dem Filtersystem 100 nach Figur 1 zu sehen, während Figur 5 eine geschnittene isometrische Darstellung des Filterelements 10 zeigt. Das Filterelement 10 ist als Flachfilter in Form eines Schubladenfilterelements ausgeführt und weist außer dem kunststoffumspritzten Filterbalg 12 mit Strömungskanalabschnitt 132 an einem Ende ein Abschlusselement 42 auf, mit dem eine Einschuböffnung 144 im Filtergehäuse 110 verschlossen wird. Die Abdichtung zwischen Rohseite 50 und Reinseite 52 des Filtersystems erfolgt durch die auf dem Rahmen 28 angeordnete Dichtung 40, welche im montierten Zustand an der Gehäusedichtfläche 160 (Figur 2) dichtend anliegt.

Der Filterbalg 12 des Filterelements 10 ist zickzackförmig zu Falten 34 gefaltet, mit parallelen, in einer Längserstreckung 14 zwischen gegenüberliegenden Stirnkanten 22, 23 des Filterbalgs 12 aufeinander folgenden, jeweils anströmseitig und abströmseitig ausgebildeten Faltkanten 26, die sich jeweils zwischen gegenüberliegenden Stirnkanten 22, 23 des Filterbalgs 12 erstrecken.

## Patentansprüche

1. Filterelement (10) zum Filtern eines Fluids, mit wenigstens einem Filterbalg (12), der in einem Rahmen (28) angeordnet ist und der eine erste flächige Anströmfläche (54) für einen ersten Fluidstrom (60) sowie wenigstens eine zweite Anströmfläche (56) für einen zweiten Fluidstrom (62) separat vom ersten Fluidstrom (60) aufweist, wobei die zweite Anströmfläche (56) von der ersten Anströmfläche (54) getrennt ist, **dadurch gekennzeichnet, dass** ein rohseitiger Strömungskanalabschnitt (132) eines zur Führung des zweiten Fluidstroms (62) vorgesehenen Strömungskanals (130) innerhalb des Rahmens (28) angeordnet vorgesehen ist.

2. Filterelement nach Anspruch 1, wobei der Strömungskanalabschnitt (132) an eine Stirnseite (23) oder Schmalseite des Filterbalgs (12) angrenzt.

3. Filterelement nach einem der vorhergehenden Ansprüche, wobei der Strömungskanalabschnitt (132) für den zweiten Fluidstrom (62) ein Segment parallel oder schräg zu einer Schmalseite des Filterbalgs (12) und ein Segment parallel oder schräg zu einer Flachseite (24) des Filterbalgs (12) aufweist.

4. Filterelement nach einem der vorhergehenden Ansprüche, wobei ein Deckelelement (46) vorgesehen ist, welches den Strömungskanalabschnitt (132) für den zweiten Fluidstrom (62) an einer Stirnseite und die zweite Anströmfläche (56) abdeckt.

5. Filterelement nach einem der vorhergehenden Ansprüche, wobei der Rahmen (28) eine Dichtfläche (38) aufweist, welche zur Abdichtung von Filterbalg (12) und Strömungskanalabschnitt (132) gegen ein Filtergehäuse (110) und zur Abdichtung zwischen der Abströmseite (68) des Filterbalgs (12) und dem rohseitigen Strömungskanalabschnitt (132) vorgesehen ist.

6. Filterelement nach einem der vorhergehenden Ansprüche, wobei der Rahmen (28) mit Filterbalg (12) und Strömungskanalabschnitt (132) als Schubladenfilterelement ausgebildet ist.

7. Filtersystem (100) zum Filtern eines Fluids mit einem Filtergehäuse (110) und einem in dem Filtergehäuse (110) zwischen einer Rohseite (50) und einer Reinseite (52) austauschbar angeordneten Filterelement (10) nach einem der vorhergehenden Ansprüche, wobei das Filtergehäuse (110) einen ersten Einlass (102) zum Einströmen des ersten Fluidstroms (60) an die erste Anströmfläche (54) und wenigstens den zweiten Einlass (106) zum Einströmen des zweiten Fluidstroms (62) an die wenigstens zweite Anströmfläche (56) aufweist.

8. Filtersystem nach Anspruch 7, wobei der Strömungskanal (130) von dem rohseitigen Einlass (106) zu der zweiten Anströmfläche (56) über wenigstens einen Teil einer Flachseite (24) des Filterbalgs (12) geführt ist und/oder wobei der Strömungskanal (130) von dem rohseitigen Einlass (106) zu der zweiten Anströmfläche (56) durch wenigstens einen Teil eines Randsegments (30) des Filterelementes (10) geführt ist.

9. Filtersystem nach Anspruch 7 oder 8, wobei in einem Gehäuseteil (112) ein Ventil (116) im zweiten Einlass (106) für den zweiten Fluidstrom (62) angeordnet ist.

10. Filtersystem nach einem der Ansprüche 7 bis 9, wobei im Strömungskanal (130) für den zweiten Fluidstrom (62) zwischen dem zweiten Einlass (106) und der zweiten Anströmfläche (56) wenigstens eine Strömungslenkung, insbesondere eine Strömungsumkehr, vorgesehen ist.

11. Filtersystem nach Anspruch 9 oder 10, wobei ein Zustrom des Fluids über das Ventil (116) druckgesteuert ausgebildet ist oder durch einen Strömungswiderstand gesteuert ausgebildet ist.

12. Filtersystem nach einem der Ansprüche 7 bis 11, wobei das Filterelement (10) als Schubladenfilterelement ausgebildet ist, das quer zur Hauptströmungsachse (128) des Fluids in das Filtergehäuse (110) eingeführt oder einführbar ist.

## Claims

1. A filter element (10) for filtering a fluid, having at least one filter bellows (12) disposed in a frame (28) and featuring a first planar inflow surface (54) for a first fluid flow (60) as well as at least a second inflow surface (56) for a second fluid flow (62) separate from the first fluid flow (60), wherein the second inflow surface (56) is separated from the first inflow surface (54), **characterized in that** a raw-side flow duct section (132) of a flow duct (130) provided for guiding the second fluid flow (62) is disposed inside the frame (28).

2. The filter element according to claim 1, wherein the flow duct section (132) is adjacent to a front face (23) or narrow side of the filter bellows (12).

3. The filter element according to one of the preceding claims, wherein the flow duct section (132) for the second fluid flow (62) features a segment parallel or oblique with respect to a narrow side of the filter bellows (12) and a segment parallel or oblique with respect to a planar side (24) of the filter bellows (12).

4. The filter element according to one of the preceding claims, wherein a cover element (46) is provided, which covers the flow duct section (132) for the second fluid flow (62) at a front face and the second inflow surface (56).

5. The filter element according to one of the preceding claims, wherein the frame (28) features a sealing surface (38) provided for sealing filter bellows (12) and flow duct section (132) against a filter housing (110) and for sealing between the outflow side (68) of the filter bellows (12) and the raw-side flow duct section (132).

6. The filter element according to one of the preceding claims, wherein the frame (28) having filter bellows (12) and flow duct section (132) is designed as a drawer-type filter element.

7. The filter system (100) for filtering a fluid having a filter housing (110) and a filter element (10) replaceably disposed in the filter housing (110) between a raw side (50) and a clean side (52) according to one of the preceding claims, wherein the filter housing (110) features a first inlet (102) for the inflow of the first fluid flow (60) to the first inflow surface (54) and at least the second inlet (106) for the inflow of the second fluid flow (62) to the at least second inflow surface (56).

8. The filter system according to claim 7, wherein the flow duct (130) is led from the raw-side inlet (106) to the second inflow surface (56) across at least one part of a planar side (24) of the filter bellows (12) and/or wherein the flow duct (130) is led from the raw-side inlet (106) to the second inflow surface (56) through at least one part of an edge segment (30) of the filter element (10).

9. The filter system according to claim 7 or 8, wherein a valve (116) is disposed in the second inlet (106) for the second fluid flow (62) in a housing component (112).

10. The filter system according to one of the claims 7 to 9, wherein at least one flow deflection, in particular a flow reversal, is provided in the flow duct (130) for the second fluid flow (62) between the second inlet (106) and the second inflow surface (56).

11. The filter system according to claim 9 or 10, wherein an inflow of the fluid via the valve (116) is designed to be pressure-controlled or is designed to be controlled via a flow resistance.

12. The filter system according to one of the claims 7 to 11, wherein the filter element (10) is designed as drawer-type filter element which is inserted or insertable into the filter housing (110) transversely to the main flow axis (128) of the fluid.

## Revendications

1. Elément filtrant (10) destiné à filtrer un fluide, ayant au moins un soufflet de filtre (12) qui est disposé dans un cadre (28) et qui présente une première surface d'afflux plane (54) pour un premier écoulement de fluide (60) ainsi qu'au moins une seconde surface d'afflux (56) pour un second écoulement de fluide (62) séparé du premier écoulement de fluide (60), dans lequel la seconde surface d'afflux (56) est séparée de la première surface d'afflux (54), **caractérisé en ce qu'**une section de canal d'écoulement du côté brut (132) d'un canal d'écoulement (130) prévu pour guider le second écoulement de fluide (62) est disposée à l'intérieur du cadre (28).

2. Élément filtrant selon la revendication 1, dans lequel la section de canal d'écoulement (132) est contiguë à une face frontale (23) ou à un côté étroit du soufflet de filtre (12).

3. Elément filtrant selon l'une quelconque des revendications précédentes, dans lequel la section de canal d'écoulement (132) pour le second écoulement de fluide (62) présente un segment parallèle ou incliné par rapport à un côté étroit du soufflet de filtre (12) et un segment parallèle ou incliné par rapport à un côté plat (24) du soufflet de filtre (12).

4. Elément filtrant selon l'une quelconque des revendications précédentes, dans lequel est prévu un élément de couvercle (46) qui recouvre la section de canal d'écoulement (132) pour le second écoulement de fluide (62) sur une face frontale et la seconde surface d'afflux (56).

5. Elément filtrant selon l'une quelconque des revendications précédentes, dans lequel le cadre (28) présente une surface d'étanchéité (38) qui est prévue pour assurer l'étanchéité du soufflet de filtre (12) et de la section de canal d'écoulement (132) contre un boîtier de filtre (110) et pour assurer l'étanchéité entre le côté aval (68) du soufflet de filtre (12) et la section de canal d'écoulement du côté brut (132).

6. Élément filtrant selon l'une quelconque des revendications précédentes, dans lequel le cadre (28) avec soufflet de filtre (12) et section de canal d'écoulement (132) est conçu en tant qu'élément filtrant à tiroir.

7. Système de filtre (100) destiné à filtrer un fluide ayant un boîtier de filtre (110) et un élément filtrant (10) disposé de manière échangeable dans le boîtier de filtre (110) entre un côté brut (50) et un côté pur (52) selon l'une quelconque des revendications précédentes, dans lequel le boîtier de filtre (110) présente une première entrée (102) pour l'admission du premier écoulement de fluide (60) vers la première surface d'afflux (54) et au moins la seconde entrée (106) pour l'admission du second écoulement de fluide (62) vers la seconde surface d'afflux (56), au moins au nombre d'une.

8. Système de filtre selon la revendication 7, dans lequel le canal d'écoulement (130) est guidé de l'entrée côté brut (106) à la seconde surface d'afflux (56) par au moins une partie d'un côté plat (24) du soufflet de filtre (12), et/ou dans lequel le canal d'écoulement (130) est guidé de l'entrée côté brut (106) à la seconde surface d'afflux (56) à travers au moins une partie d'un segment de bord (30) de l'élément filtrant (10).

9. Système de filtre selon la revendication 7 ou 8, dans lequel une vanne (116) est disposée, dans un composant de boîtier (112), dans la seconde entrée (106) pour le second écoulement de fluide (62).

10. Système de filtre selon l'une quelconque des revendications 7 à 9, dans lequel au moins une déviation d'écoulement, notamment une inversion d'écoulement, est prévu dans le canal d'écoulement (130) pour le second écoulement de fluide (62) entre la seconde entrée (106) et la seconde surface d'afflux (56)

11. Système de filtre selon la revendication 9 ou 10, dans lequel une arrivée du fluide par la vanne (116) est réalisée de manière commandée par la pression ou commandée par une résistance à l'écoulement.

12. Système de filtre selon l'une quelconque des revendications 7 à 11, dans lequel l'élément filtrant (10) est conçu en tant qu'élément filtrant à tiroir, qui est introduit ou peut être introduit dans le boîtier de filtre (110) transversalement à l'axe principal d'écoulement (128) du fluide.
